# EUROPEAN PATENT SPECIFICATION

(11) **EP 4 046 281 B1**
(45) Date of publication and mention of the grant of the patent: **27.05.2026**
(21) Application number: 19802157.8
(22) Date of filing: 11.11.2019
(51) Int. Cl.: H04B 7/024, H04B 7/0404, H04B 7/0456, H04W 56/00, H04B 7/26

(54) **TRANSMITTING DEVICE COOPERATION**
KOOPERATION VON ÜBERTRAGUNGSVORRICHTUNGEN
COOPÉRATION DE DISPOSITIF DE TRANSMISSION

(43) Date of publication of application: 24.08.2022
(73) Proprietor: Huawei Technologies Co., Ltd., Shenzhen, Guangdong 518129 (CN)
(72) Inventor: EZRI, Doron, 80992 Munich (DE); MELZER, Ezer, 80992 Munich (DE); LEVINBOOK, Yoav, 80992 Munich (DE); TSODIK, Genadiy, 80992 Munich (DE); GUO, Yuchen, 80992 Munich (DE); SHILO, Shimon, 80992 Munich (DE)
(74) Representative: Gill Jennings & Every LLP
(86) International application number: PCT/EP2019/080877
(87) International publication number: WO 2021/093932

(56) References cited:
- WO-A1-2019/051338
- WO-A1-2019/051338
- CN-A- 110 324 889
- CN-A- 110 324 889
- US-A1- 2014 211 779
- US-A1- 2014 211 779
- US-A1- 2017 118 731

## Description

### BACKGROUND

The present disclosure, in some embodiments thereof, relates to joint transmission by cooperating transmitting devices and, more specifically, but not exclusively, to joint transmission by cooperating Wi-Fi access points.

Joint data transmission by cooperating access points (APs) is considered an important feature that will be incorporated into upcoming generations of Wi-Fi standards, including the Extremely High Throughput (EHT) 802.11be standard. There are various forms of AP cooperation. In the Wi-Fi joint transmission scheme, multiple APs jointly transmit data to one or more stations (STAs). The APs transmit the same information simultaneously to the STA, effectively increasing the signal to noise ratio (SNR) at the STA. Another cooperation scheme is null steering, where a transmitter (e.g. an AP) transmits in a manner that the signal power respective to the transmitter, as received at certain STA(s), is reduced. Other forms of AP cooperation may be supported by the new standards as well in both downlink (DL) and uplink (UL).

AP cooperation, and in particular joint transmission (JT), is very sensitive to various impairments such as time and frequency synchronization. Cooperating APs need to be synchronized in time, frequency and phase.
- Time synchronization - Is relatively easy to achieve within the OFDM Guard Interval (GI), also known as a Cyclic Prefix (CP), especially in small deployment spaces where the cooperating APs are nearby.
- Frequency and phase synchronization - One method is for the APs to wirelessly synchronize and correct their relative drifts in order to avoid costly additional inter-AP links.

Consider a high-level example of a protocol in which the cooperating APs transmit a null data packet (NDP), gather the Channel State Information (CSI) from the STA(s) and then jointly transmit the DL data. The exemplary protocol includes two stages:
- **Stage #1:** Cooperating APs jointly transmit an NDP, after synchronizing (wirelessly) to a Master AP. The STA(s) report their channel state information (CSI) based on the (jointly transmitted) NDP; and
- **Stage #2:** The APs transmit data jointly to the STA(s).

In current joint data transmission schemes, the acquisition timings of the cooperating APs may vary between packets, due to the limited estimation accuracy of Start of Packet (SOP) over noisy multipath wireless channels (particularly non-static channels). This timing misalignment is very significant because it adversely affects the phase coherence of the downlink signals from the cooperating APs, possibly to the extent that the necessary SNR is not attainable at the STA receiver(s). Note that the same problem may occur with reciprocity-based CSI because the APs would not necessarily lock on the uplink NDP with identical timing as that used for downlink joint transmission.

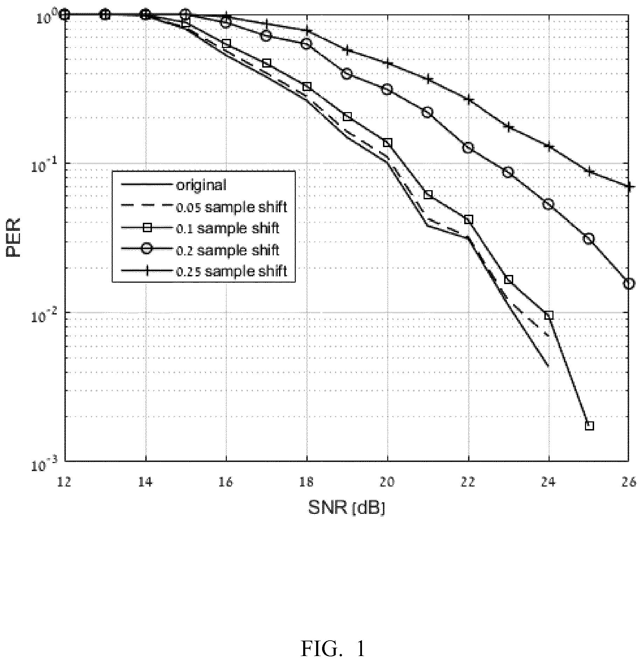

Reference is now made to FIG. 1, which presents simulation results for joint transmission by APs under different sample shift misalignment conditions. The simulated system is based on:
i) Two APs with 4 transmit (Tx) antennas (total of 8 Tx antennas);
ii) Two STAs, each with two receive (Rx) antennas;
iii) 1000B data;
iv) MCS 5 (64QAM rate 2/3) with 2 streams per STA;
v) 20 MHz bandwidth (BW) → 20 Msamp/sec (1 sample = 50nsec);
vi) Low-density parity-check (LDPC) coding; and
vii) TGn-D non-line-of-sight (NLOS) channel model.

FIG. 1 shows the packet error rate (PER) for several values of sub-sample offsets between the two APs. It is seen that with a 0.05 sample shift the PER is almost identical to that of the original (perfect synchronization) case. However, with 0.1 sample shift there is a noticeable degradation gap. This gap widens as the sample shift increases. With a 0.2 sample shift the performance degradation is unacceptable.

The tolerance of the acquisition is dominated by several factors:
- SNR
- Bandwidth
- Multipath channel

It is very difficult to achieve sub-sample alignment between the cooperating APs, across multiple acquisitions. Typically the resolution is in the order of the A/D rate (e.g. two to four times the bandwidth), which translates to one half or one quarter samples. This is far from the required sub-sample alignment.

In summary, although offering many benefits, joint transmission by multiple APs suffers from degraded performance even under conditions of minor sub-sample misalignment.

US 2014/211779 A1 describes scalable synchronization for distributed multiuser MIMO. WO 2019/051338 A1 describes methods and system for join access point MIMO transmissions. CN 110 324 889 A describes a clock synchronizing method, communication device and communication equipment. US 2017/118731 A1 discusses a communication system, a base station, a user equipment (UE), and a timing synchronization method for the base station thereof.

### SUMMARY

It is an object of the present disclosure to provide an apparatus, a system, a computer program product and a method for joint data transmission by multiple transmitting devices.

Embodiments of the disclosure enable multiple transmitting devices to be synchronized (wirelessly in particular) with high accuracy on a sub-sample level during joint data transmission.

One of the transmitting devices operates as a master and one or more other transmitting devices operate as slaves. A reference time is established for each one of the cooperating transmitting devices, based on a signal acquired during communication performed between transmitting device(s) and/or receiving device(s) prior to data transmission (for example acquisition of a data frame transmitted for the purpose of gathering CSI).

In some embodiments, the first acquisition is of a synchronization trigger signal sent by the master transmitting device. For the master transmitting device itself, the reference time is established based on the transmission time of the synchronization trigger rather than its acquisition. In other embodiments the first acquisition is of a signal (e.g. an NDP) sent by one or more of the receiving device(s).

The cooperating transmitting devices count the same number of sampling intervals from the first acquisition. Each of the cooperating transmitting devices start data transmission when it completes its count.

A benefit of the disclosure is that it provides a simple manner for the cooperating transmitting devices to maintain synchronization at a much finer resolution than a single sampling interval. The result is a coherently received signal from multiple transmitters and much higher SNR at the receiving device(s) than is obtained for joint transmissions with even a slightly coarser resolution.

The foregoing and other objects are achieved by the features of the independent claims. Further implementation forms are apparent from the dependent claims, the description and the figures.

According to a first aspect of some embodiments of the present disclosure there is provided a system of transmitting devices for a wireless communication network. The system includes multiple transmitting devices configured to transmit in parallel a joint data signal to a receiving device by:
establishing one of the transmitting devices as a master transmitting device and at least one other of the transmitting devices as a slave transmitting device;
setting respective reference times for the master transmitting device and for the at least one slave transmitting device;
counting the same number of sampling intervals at the master transmitting device and at the at least one slave transmitting device in accordance with the respective reference times; and
upon completion of counting the sampling intervals, transmitting the joint data signal to the receiving device from both the master transmitting device and the at least one slave transmitting device.

According to a second aspect of some embodiments of the present disclosure there is provided a method for wireless communication by multiple transmitting devices. The transmitting devices include a master transmitting device and at least one slave transmitting device. The method includes:
setting respective reference times for the master transmitting device and for the at least one slave transmitting device;
counting the same number of sampling intervals at the master transmitting device and at the at least one slave transmitting device in accordance with the respective reference times; and
upon completion of counting the sampling intervals, transmitting a joint data signal to a receiving device in parallel from both the master transmitting device and the at least one slave transmitting device.

Thus aspects of the disclosure provide a simple manner for the cooperating transmitting devices to maintain synchronization at a much finer resolution than a single sampling interval. The result is a coherently received signal from multiple transmitters and much higher SNR at the receiving device(s) than is obtained for joint transmissions with even a slightly coarser resolution.

With reference to the first aspect or the second aspect, in a possible implementation the respective reference time is set for the master transmitting device based on a time of transmission of a synchronization trigger signal by the master transmitting device and is set for each of the at least one slave transmitting device based on a respective time of acquisition of the synchronization trigger signal by the slave transmitting device. Thus the master transmitting device is able to control when the slave transmitting devices set (or reset) their respective reference times simply by transmitting a synchronization trigger.

With reference to the first aspect or the second aspect, in a possible implementation the respective reference times are set based on respective times of acquisition by the master transmitting device and the at least one slave transmitting device of a signal transmitted by the receiving device. A benefit of this implementation is that using implicit feedback techniques based on the signal transmitted by the receiving device (e.g. an NDP) the cooperating transmitting devices may be synchronized in both uplink and downlink transmission.

With reference to the first aspect or the second aspect, in a possible implementation the wireless communication network uses an IEEE 802.11 standard, and wherein the transmitting devices comprise access points, APs, and the receiving device comprises a station, STA. This implementation is compatible with Wi-Fi systems which are widely used for wireless data communication.

With reference to the first aspect or the second aspect, in a possible implementation the duration of the sampling intervals is decided by intercommunication between the master transmitting device and at least one of the slave transmitting devices. A benefit of this implementation is that it provides flexibility in establishing the sampling interval duration and enables changing the sampling interval dynamically during operation.

With reference to the first aspect or the second aspect, in a possible implementation the number of sampling intervals is predetermined. This approach eliminates the need for communication between the master transmitting device and the slave transmitting device(s) in order to establish the number of sampling intervals.

With reference to the first aspect or the second aspect, in a possible implementation at least one of the slave transmitting devices calculates the number of sampling intervals by multiplying a predetermined integer by a multiplier determined from a received signal. This approach reduces the amount of data which needs to be communicated between the master transmitting device and the slave transmitting device(s) in order to establish the number of sampling elements relative to sending a longer data sequence giving of the exact number of sampling intervals.

With reference to the first aspect or the second aspect, in a possible implementation the transmitting devices maintain multiple sessions for transmitting data to respective receiving devices, each of the sessions utilizing a respective subset of the transmitting devices or possibly all of the transmitting devices. A benefit of using subsets of transmitting devices for different sessions is that it adds flexibility to the selection of cooperating transmitting devices participating in a joint transmission and frees up communication resources (e.g. for other sessions and/or for communication network management).

With reference to the first aspect or the second aspect, in a possible implementation the master transmitting device is configured to transmit a cooperation parameter signal conveying parameters for use by at least one of the slave transmitting devices for transmitting the joint data signal. This enables conveying additional information to the slave transmitting devices so that joint communication may be performed in an efficient manner.

According to a third aspect of some embodiments of the present disclosure there is provided a computer program product including computer program code, which, when executed by a processor, causes the method according to the second aspect of some embodiments of the disclosure to be performed.

According to a fourth aspect of some embodiments of the present disclosure there is provided non-transitory computer-readable recording medium that stores therein a computer program product which, when executed by a processor, causes the method according to the second aspect of some embodiments of the disclosure to be performed.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIG. 1 is a graph showing simulation results for joint transmission by APs under different sample shift misalignment conditions; and
FIG. 2 is a simplified block diagram of a system of transmitting devices for joint transmission in a wireless communication network, according to embodiments of the disclosure;
FIG. 3 is a simplified block diagram of a Wi-Fi joint transmission system, according to an exemplary embodiment of the disclosure;
FIG. 4 is a simplified flow chart of a method for joint transmission by a system of transmitting devices according to embodiments of the disclosure; and
FIGS. 5-10 are simplified signaling diagrams of joint transmission in a Wi-Fi network, according to respective exemplary embodiments of the disclosure.

### DETAILED DESCRIPTION

The present disclosure, in some embodiments thereof, relates to joint transmission by cooperating transmitting devices and, more specifically, but not exclusively, to joint transmission by cooperating Wi-Fi access points.

Embodiments of the disclosure ensure that a joint data signal transmitted by cooperating transmitting devices is aligned in time and coherently adjusted in phase with high accuracy when it is received by a receiving device. As demonstrated by FIG. 1, highly accurate sub-sample synchronization is crucial for obtaining the SNR required for reliable reception of the joint data signal by the receiving device.

The cooperating transmitting devices establish reference points in time (also denoted reference times) based on the times of acquisition of the same signal (or based on the time of transmission of the latter signal in cases where one of the cooperating transmitting devices is the source of this signal). Each one of the cooperating transmitting devices begins counting a number of sampling intervals from its respective reference time. Each transmitting device transmits the joint data signal when it completes the count.

Optionally, the acquired signal is a trigger signal sent by one of the cooperating transmitting devices (e.g. a master transmitting device). In alternate embodiments, the acquired signal is a signal transmitted by a station (e.g. as part of the communication protocol).

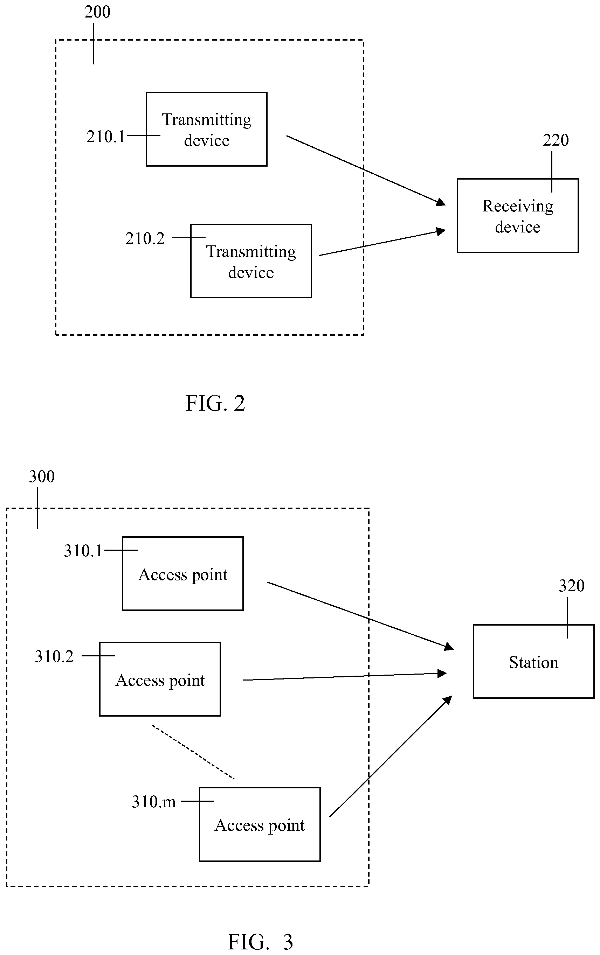

Reference is now made to FIG. 2, which is a simplified block diagram of a system of transmitting devices for a wireless communication network, according to embodiments of the disclosure.

In the non-limiting example of FIG. 2, system 200 includes two transmitting devices (210.1. and 210.2) which transmit jointly to a single receiving device 220.

In other embodiments, a system for performing joint transmission (also denoted herein a joint transmission system) includes more than two transmitting devices. Alternately or additionally, the transmitting devices perform joint transmission to multiple receiving devices.

When the joint transmission system includes three or more transmitting devices, not all transmitting devices must participate in every joint transmission to a receiving device. For example different sets of transmitting devices may participate in different communication sessions.

Optionally, the joint transmission system uses one of the following communication standards:
a) IEEE 802.11 standard (i.e. Wi-Fi);
b) Long-Term Evolution (LTE) standard;
c) LTE Advanced (LTE-A) standard; and
d) 5G New Radio (NR) standard.

Reference is now made to FIG. 3, which is a simplified block diagram of a Wi-Fi joint transmission system, according to an exemplary embodiment of the disclosure. In the exemplary Wi-Fi embodiment, the transmitting devices are access points (APs) and the receiving devices are stations (STAs). FIG. 3 illustrates a Wi-Fi joint transmission system 300 having **m** cooperating access points (310.1-310.m) capable of jointly transmitting to station 320.

Optionally, one or more of the STAs act as cooperating transmitting device(s) and transmit the joint data signal to a different STA.

As used herein the term "joint data signal" means a signal carrying data that is transmitted in parallel from multiple source devices to the same target device.

As used herein the term "transmitting device" means a device capable of both transmitting and receiving wireless communication signals (e.g. equipped with a transceiver), which acts as one of the multiple source devices in the process of joint data signal communication.

As used herein the term "receiving device" means a device capable of receiving a wireless communication signal, which acts as a target device in the process of joint data signal communication. Optionally, a receiving device may also be capable of transmitting wireless communication signals (e.g. be equipped with a transceiver).

As used herein the terms "joint transmission" and "joint data transmission" mean transmission of the same data signal by multiple transmitting devices to a receiving device.

As used herein the term "cooperating transmitting devices" means transmitting devices that operate together to perform a joint data transmission.

As used herein the term "sampling interval" means the time duration between consecutive samples taken at any of the transmitting devices. The sampling interval may, for example, be defined as the inverse of the signal bandwidth. Optionally, the duration of the sampling intervals is decided by intercommunication between the master transmitting device and at least one of the slave transmitting devices.

As used herein the term "reference time" means a point in time which serves as a reference for the respective transmitting device to begin counting sampling intervals.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other embodiments or of being practiced or carried out in various ways.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

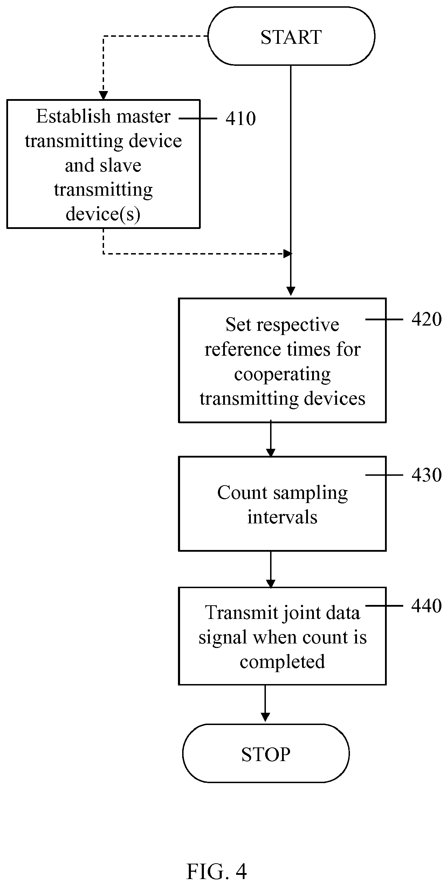

Reference is now made to FIG. 4, which is a simplified flow chart of joint data transmission by a system of transmitting devices, according to embodiments of the disclosure. The system includes multiple transmitting devices which perform joint transmission to one or more receiving devices.

During joint transmission one of the transmitting devices functions as a master transmitting device and at least one other transmitting device operates as a slave transmitting device.

Optionally, in 410 one of the transmitting devices is established as a master transmitting device and one or more other transmitting devices are established as slave transmitting device(s).

Further optionally, establishing which transmitting device is the master transmitting device is performed dynamically prior to the joint transmission process (e.g. by intercommunication between the transmitting devices).

In alternate optional embodiments, one of the transmitting devices in the system is preset to function as the master transmitting device and the remainder are preset to function as slave transmitting devices.

In 420, respective reference times are set for the transmitting devices cooperating in the joint data transmission.

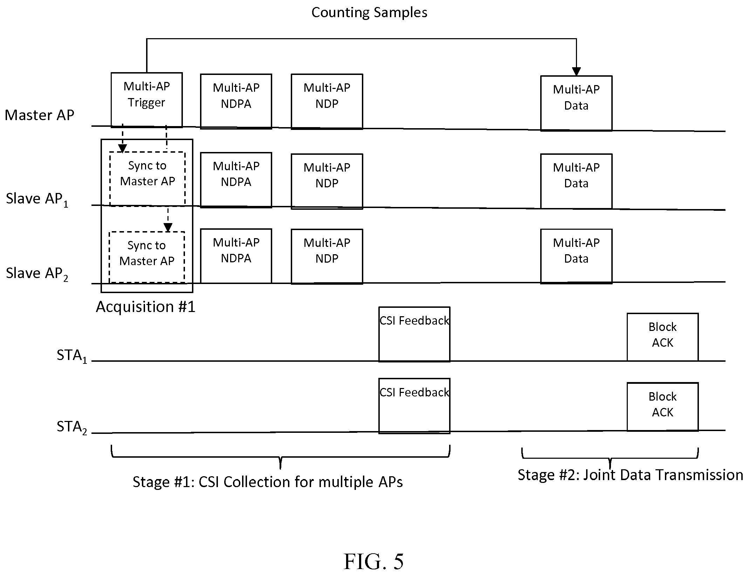

Optionally, the reference times are set at the slave transmitting device(s) based on a time of acquisition of a synchronization trigger signal transmitted by the master transmitting device. Further optionally, the trigger signal carries additional information (e.g. a duration of the sampling interval, the number of sampling intervals to be counted, a session identifier, etc.). Exemplary embodiments of setting the reference times based on acquisition of a synchronization trigger sent by the master transmitting device are described below with reference to FIGS. 5-9.

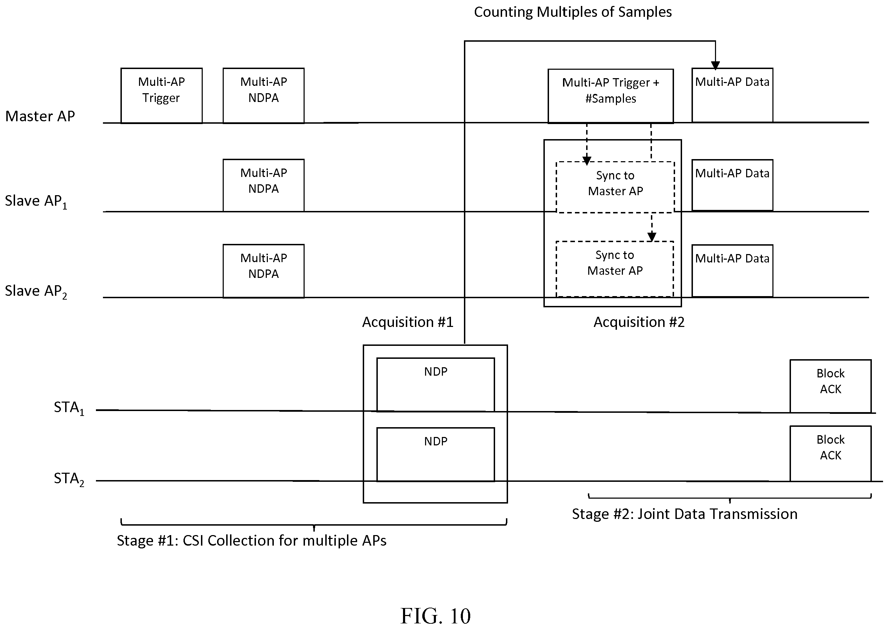

Alternately, the respective reference times for the master transmitting device and the slave transmitting device(s) are based on the time of acquisition of a signal transmitted by a receiving device (e.g. a STA transmitting an NDP). Optionally, the signal is a standard signal transmitted by the receiving device as part of the wireless communication protocol (i.e. is not necessarily a dedicated synchronization signal). Thus the receiving device is not required to operate differently during joint data transmission nor even be aware that the signal it is receiving is a joint data transmission signal. An exemplary embodiment of setting the reference times based on acquisition of a signal transmitted by the receiving device is described below with reference to FIG. 10.

In 430, the same number of sampling intervals is counted by the cooperating transmitting device(s) in accordance with the reference times. The reference times may be set at any stage of processing the acquired signal. In one exemplary embodiment, the transmitting devices begin counting sampling intervals when FFT processing of the acquired signal begins. In a second exemplary embodiment, the transmitting devices begin counting sampling intervals from the end of the acquired signal. The end of the acquired signal may, for example, be indicated via the 'Duration' field within the Legacy SIG field.

In 440, each of the cooperating transmitting devices transmits the joint data signal to the receiving device when it completes counting the required number of sampling intervals.

Because the cooperating transmitting devices all count the same number of sampling intervals from their respective reference times, differences in the times of acquisition by the slave transmitting devices of signals sent by the master transmitting device are preserved. These timing differences may be correctly absorbed (or compensated for) by precoding employed by the cooperating transmitting devices, as they do not change between a prior stage of the communication process (e.g. CSI data collection) and the stage of data transmission.

Note that the joint data transmission is unlikely to be affected by frequency offset. For example, an approximately 30Hz residual carrier frequency offset (corresponding to ~5ppb @5.5GHz) translates over an expected duration between trigger frames of 0.5ms into a negligible clock mismatch of 5·10⁻⁹ × 0.5·10⁻³sec = 2.5·10⁻¹²sec.

Optional embodiments of how the sampling interval count is set include but are not limited to:
a) The sampling interval count is a predetermined integer number;
b) The sampling interval count is sent by the master transmitting device to the one or more slave transmitting device(s); and
c) The sampling interval count is calculated by the slave transmitting device(s) based on information provided by the master transmitting device (e.g. by multiplying a predetermined integer by a multiplier sent by the master transmitting device).

Optionally, the master transmitting device also transmits a cooperation parameter signal that is acquired by the slave transmitting device(s). The cooperation parameter signal conveys parameters that are used for joint data transmission by at least one of the slave transmitting device(s). Further optionally, the cooperation parameter signal includes information which indicates how many sampling intervals should be counted before the slave transmitting device(s) begin data transmission.

Optionally, the transmitting devices maintain multiple sessions to receiving devices. Each of the sessions performs joint data transmission to the respective receiving device using all of the transmitting devices or a subset of the transmitting devices. Optionally, the cooperation parameter signal indicates the session number, so that only the transmitting devices involved in that session perform joint data transmission when the sampling interval count is completed.

Reference is now made to FIGS. 5-10, which are simplified signaling diagrams of joint transmission in a Wi-Fi network, according to respective exemplary embodiments of the disclosure. In the exemplary embodiments, three APs (one master AP and two slave APs) transmit jointly to two stations, STA₁ and STA₂.

FIGS. 5-9 are based on the following exemplary two-stage Wi-Fi protocol:
- **Stage #1:** CSI collection by the APs - After Acquisition #1 of a trigger signal sent by the Master AP, cooperating APs jointly transmit a null data packet announcement (NDPA) followed by an NDP to the STA(s). In response, the STAs report back their channel state information (CSI) based on estimations performed on the received signal of the jointly transmitted NDP; and
- **Stage #2:** Joint Data Transmission - After completing the sampling interval count from their respective reference times, each of the cooperating APs transmits the joint data signal.

Reference is now made to FIG. 5, which is a simplified signaling diagram of joint transmission by multiple APs according to a first exemplary embodiment of the disclosure. The slave APs make a first acquisition (Acquisition #1) of a Multi-AP trigger (i.e. the synchronization trigger signal) and begin the procedure of requesting CSI feedback from the STAs. The synchronization trigger signal indicates the number of sampling intervals that should be counted until the beginning of the joint data transmission. All three APs (master AP and two slave APs) count the number of sampling intervals indicated by the trigger signal and then begin data transmission.

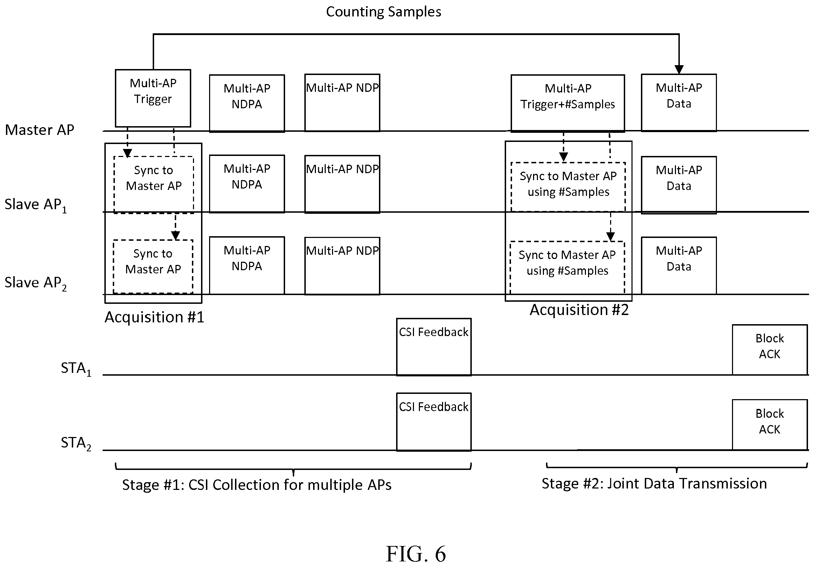

Reference is now made to FIG. 6, which is a simplified signaling diagram of joint transmission by multiple APs according to a second exemplary embodiment of the disclosure. In FIG. 6 the slave APs make two acquisitions of respective Multi-AP triggers transmitted by the Master AP. In Acquisition #1 the slave APs sync to the synchronization trigger signal in order to set the reference times and begin the procedure of requesting CSI feedback. In Acquisition #2 the slave APs sync to the Multi-AP trigger for joint data transmission. The Multi-AP trigger for joint data transmission includes the number of sampling intervals (i.e. #Samples) that should be counted starting from the end of the first Multi-AP trigger (thus functioning as a cooperation parameter signal). The slave APs use this value to align their multi-AP joint data transmission. The APs begin data transmission after #Samples have been counted since their respectively set reference times.

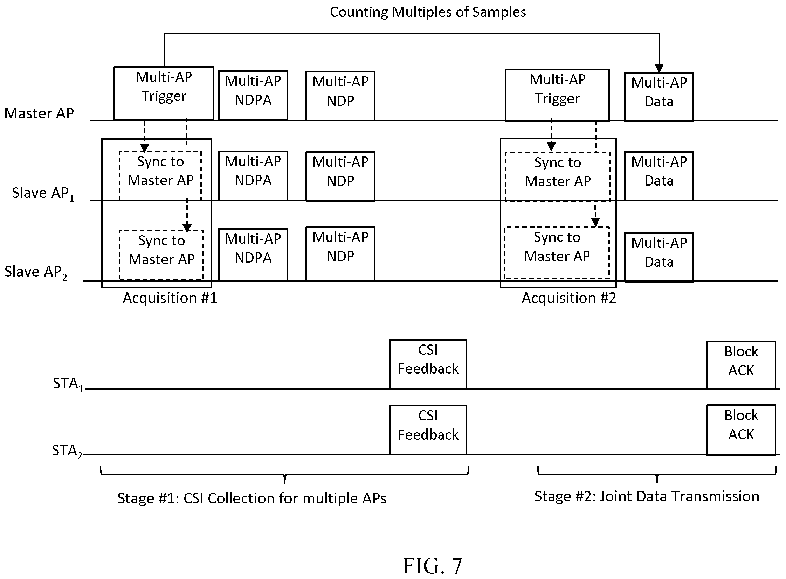

Reference is now made to FIG. 7, which is a simplified signaling diagram of joint transmission by multiple APs according to a third exemplary embodiment of the disclosure. The slave APs make two acquisitions of respective Multi-AP triggers transmitted by the Master AP. In Acquisition #1 the slave APs sync to the synchronization trigger signal in order to set their respective reference times and begin the procedure of requesting CSI feedback. In Acquisition #2 the slave APs sync to the Multi-AP trigger for joint data transmission. After Acquisition #2, the cooperating APs start joint data transmission an integer multiple of K sampling intervals from the end of the synchronization trigger, where K is a pre-determined integer. As an example, the second multi-AP trigger may include an indication of the number of 802.11 slots that should be counted until the beginning of the joint data transmission. A slot duration may be, for example, 9usec. Since Wi-Fi slots are typically much longer than a single sample, the number of bits required to specify the number of sampling intervals that should be counted is fewer when it is indicated by the number of slots rather than by the number of sampling intervals.

Optionally, the integer multiple is the largest integer which yields a duration smaller than the duration corresponding to the end of the second Multi-AP Trigger plus the Short Interframe Space (SIFS). In alternate embodiments, the integer multiple is the smallest integer which yields a duration that is not smaller than the duration corresponding to the end of the second Multi-AP Trigger plus the SIFS.

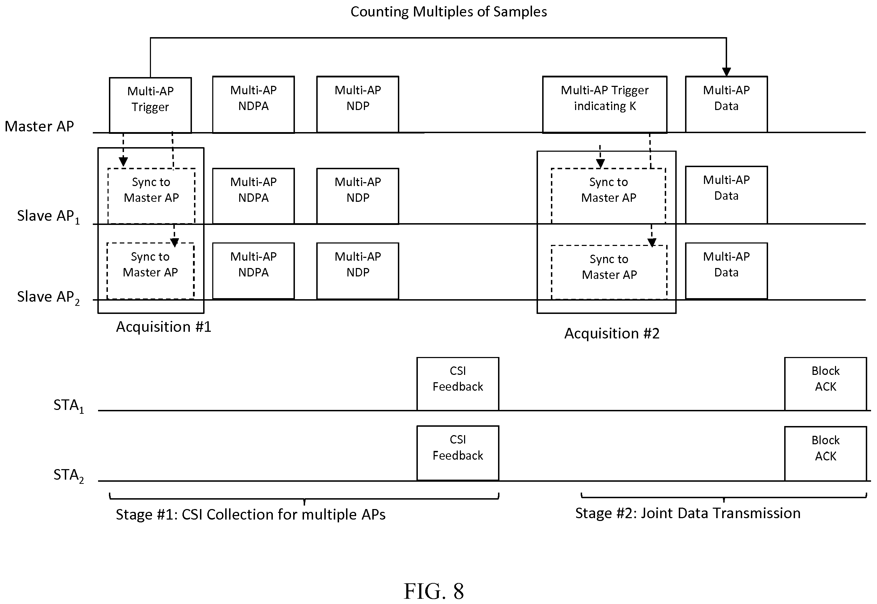

Reference is now made to FIG. 8, which is a simplified signaling diagram of joint transmission by multiple APs according to a fourth exemplary embodiment of the disclosure. Similarly to FIG. 7, the slave APs make two acquisitions of respective Multi-AP triggers transmitted by the Master AP. In Acquisition #1 the slave APs sync to the synchronization trigger in order to set the reference times and begin the procedure of requesting CSI feedback from the STA(s). In Acquisition #2 the slave APs sync to a Multi-AP trigger for joint data transmission. The Multi-AP trigger for joint data transmission includes the value of K. After Acquisition #2, the cooperating APs start joint data transmission an integer multiple of K sampling intervals from the reference times set using Acquisition #1.

Optionally, the integer multiple is the largest integer which is smaller than end of the Multi-AP Trigger plus SIFS. In alternate embodiments, the integer multiple is the smallest integer which is larger than the end of the Multi-AP Trigger plus SIFS.

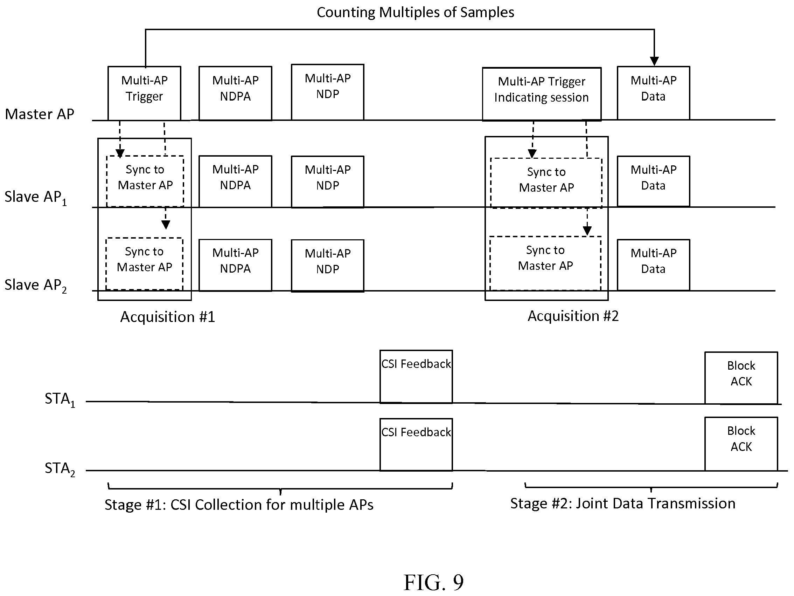

Reference is now made to FIG. 9, which is a simplified signaling diagram of joint transmission by multiple APs according to a fifth exemplary embodiment of the disclosure. In the exemplary embodiment of FIG. 9 there are multiple AP cooperation sessions. In each session data is transmitted jointly by a group of cooperating APs to a STA. A session indicator is included in one of the Multi-AP trigger signals (shown in FIG. 9 as included in the second Multi-AP trigger signal). When an AP acquires a Multi-AP trigger signal it extracts the session identifier (if present), determines if it is participating in the identified session, and thus knows if it should or should not transmit the joint data signal later on.

Reference is now made to FIG. 10, which is a simplified signaling diagram of joint transmission by multiple APs according to a sixth exemplary embodiment of the disclosure. The exemplary embodiment of FIG. 10 uses implicit feedback from the STA(s), which assumes that the uplink channel and the downlink channel have the same properties. In this case, the cooperating APs acquire a null data packet (NDP) transmitted by STA₁ and/or STA₂. The cooperating APs establish the reference times based on the acquired NDP from the STA(s) and start counting sampling intervals from the reference times. The cooperating APs also use the NDP to estimate the uplink channel and assume reciprocity to compute the downlink precoder. In this manner, the cooperating APs are synchronized in both uplink (on the NDP signal) as well as in downlink joint data transmission.

In summary, embodiments of the disclosure provide an easily implemented way to obtain sub-sample alignment at the high accuracy needed for reliable joint data transmission in wireless networks. The cooperating transmitting devices establish reference times using a synchronization trigger signal (such as a Wi-Fi NDP) acquired before a transmit data trigger signal is acquired. The transmitting devices transmit the joint data after they have counted the same number of sampling intervals since their established respective reference times. Thus any timing misalignment in acquisition of the synchronization trigger signal is accurately maintained when data transmission is initiated, allowing for full compensation by preprocessing (e.g. precoding) at the transmitting devices.

The methods as described above are used in the fabrication of integrated circuit chips.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A system of transmitting devices for a wireless communication network, wherein the wireless communication network is a Wi-Fi network, comprising a plurality of transmitting devices configured to transmit in parallel a joint data signal to a receiving device by:
establishing (410) one of said plurality of transmitting devices as a master transmitting device and at least one other of said plurality of transmitting devices as a slave transmitting device;
setting (420) respective reference times for said master transmitting device and for said at least one slave transmitting device, wherein said respective reference times are set based on respective times of acquisition by said master transmitting device and said at least one slave transmitting device of a same signal transmitted by said receiving device;
counting (430) a same number of sampling intervals at said master transmitting device and at said at least one slave transmitting device, wherein counting of sample intervals at the master transmitting device and the at least one slave transmitting device begins at said respective reference times; and
upon completion of said counting of said sampling intervals, transmitting (440) said joint data signal to said receiving device from both said master transmitting device and said at least one slave transmitting device.

2. The system of claim 1, wherein said wireless communication network uses an IEEE 802.11 standard, and wherein said transmitting devices comprise access points, APs, and said receiving device comprises a station, STA.

3. The system of any one of claims 1-2, wherein a duration of said sampling intervals is decided by intercommunication between said master transmitting device and at least one of said slave transmitting devices.

4. The system of any one of claims 1-3, wherein said number of sampling intervals comprises a predetermined number.

5. The system of any one of claims 1-3, wherein at least one of said slave transmitting devices is configured to calculate said number of sampling intervals by multiplying a predetermined integer by a multiplier determined from a received signal.

6. The system of any one of claims 1-5, wherein said plurality of transmitting devices maintain a plurality of sessions for transmitting data to respective receiving devices, each of said sessions utilizing a respective subset of said plurality of transmitting devices.

7. The system of any one of claims 1-6, wherein said master transmitting device is configured to transmit a cooperation parameter signal conveying parameters for use by at least one of said slave transmitting devices for transmitting said joint data signal.

8. A method for wireless communication within a Wi-Fi network by a plurality of transmitting devices, said transmitting devices comprising a master transmitting device and at least one slave transmitting device, said method comprising:
setting (420) respective reference times for said master transmitting device and for said at least one slave transmitting device, further comprising setting said reference times based on respective times of acquisition by said master transmitting device and said at least one slave transmitting device of a same signal transmitted by said receiving device;
counting (430) a same number of sampling intervals at said master transmitting device and at said at least one slave transmitting device, wherein counting of sample intervals at the master transmitting device and the at least one slave transmitting device begins at said respective reference times; and
upon completion of said counting of said sampling intervals, transmitting (440) a joint data signal to a receiving device in parallel from both said master transmitting device and said at least one slave transmitting device.

9. The method of claim 8, wherein a duration of said sampling intervals is decided by intercommunication between said master transmitting device and at least one of said slave transmitting devices.

10. The method of any one of claims 8-9, wherein said wireless communication network uses an IEEE 802.11 standard, and wherein said transmitting devices comprise access points, APs, and said receiving device comprises a station, STA.

11. The method of any one of claims 8-10, wherein said number of sampling intervals is predetermined.

## Patentansprüche

1. System von Übertragungsvorrichtungen für ein drahtloses Kommunikationsnetzwerk, wobei das drahtlose Kommunikationsnetzwerk ein Wi-Fi-Netzwerk ist, umfassend eine Vielzahl von Übertragungsvorrichtungen, die dazu konfiguriert ist, durch Folgendes ein gemeinsames Datensignal parallel an eine Empfangsvorrichtung zu senden:
Festlegen (410) von einer der Vielzahl von Übertragungsvorrichtungen als Master-Übertragungsvorrichtung und mindestens einer anderen der Vielzahl von Übertragungsvorrichtungen als Slave-Übertragungsvorrichtung;
Einstellen (420) jeweiliger Referenzzeiten für die Master-Übertragungsvorrichtung und für die mindestens eine Slave-Übertragungsvorrichtung, wobei die jeweiligen Referenzzeiten basierend auf den jeweiligen Zeiten der Erfassung durch die Master-Übertragungsvorrichtung und die mindestens eine Slave-Übertragungsvorrichtung desselben Signals, das durch die Empfangsvorrichtung übertragen wird, eingestellt sind;
Zählen (430) derselben Anzahl von Abtastintervallen an der Master-Übertragungsvorrichtung und an der mindestens einen Slave-Übertragungsvorrichtung, wobei das Zählen der Abtastintervalle an der Master-Übertragungsvorrichtung und der mindestens einen Slave-Übertragungsvorrichtung zu den jeweiligen Referenzzeiten beginnt; und
nach Abschluss des Zählens der Abtastintervalle, Übertragen (440) des gemeinsamen Datensignals an die Empfangsvorrichtung sowohl aus der Master-Übertragungsvorrichtung als auch aus der mindestens einen Slave-Übertragungsvorrichtung.

2. System nach Anspruch 1, wobei das drahtlose Kommunikationsnetzwerk einen IEEE 802.11-Standard verwendet, und wobei die Übertragungsvorrichtungen Zugangspunkte, APs, umfassen, und die Empfangsvorrichtung eine Station, STA, umfasst.

3. System nach einem der Ansprüche 1-2, wobei eine Dauer der Abtastintervalle durch Kommunikation zwischen der Master-Übertragungsvorrichtung und mindestens einer der Slave-Übertragungsvorrichtungen entschieden wird.

4. System nach einem der Ansprüche 1-3, wobei die Anzahl von Abtastintervallen eine vorbestimmte Zahl umfasst.

5. System nach einem der Ansprüche 1-3, wobei mindestens eine der Slave-Übertragungsvorrichtungen dazu konfiguriert ist, die Anzahl von Abtastintervallen durch Multiplizieren einer vorbestimmten ganzen Zahl mit einem aus einem empfangenen Signal bestimmten Multiplikator zu berechnen.

6. System nach einem der Ansprüche 1-5, wobei die Vielzahl von Übertragungsvorrichtungen eine Vielzahl von Sitzungen zum Übertragen von Daten an jeweilige Empfangsvorrichtungen aufrechterhält, wobei jede dieser Sitzungen eine jeweilige Teilmenge der Vielzahl von Übertragungsvorrichtungen nutzt.

7. System nach einem der Ansprüche 1-6, wobei die Master-Übertragungsvorrichtung dazu konfiguriert ist, ein Kooperationsparametersignal zu übertragen, das Parameter zur Verwendung durch mindestens eine der Slave-Übertragungsvorrichtungen zum Übertragen des gemeinsamen Datensignals vermittelt.

8. Verfahren zur drahtlosen Kommunikation innerhalb eines Wi-Fi-Netzwerks durch eine Vielzahl von Übertragungsvorrichtungen, wobei die Übertragungsvorrichtungen eine Master-Übertragungsvorrichtung und mindestens eine Slave-Übertragungsvorrichtung umfassen, wobei das Verfahren Folgendes umfasst:
Einstellen (420) jeweiliger Referenzzeiten für die Master-Übertragungsvorrichtung und für die mindestens eine Slave-Übertragungsvorrichtung, ferner umfassend Einstellen der Referenzzeiten basierend auf den jeweiligen Zeiten der Erfassung durch die Master-Übertragungsvorrichtung und die mindestens eine Slave-Übertragungsvorrichtung desselben Signals, das durch die Empfangsvorrichtung übertragen wird;
Zählen (430) derselben Anzahl von Abtastintervallen an der Master-Übertragungsvorrichtung und an der mindestens einen Slave-Übertragungsvorrichtung, wobei das Zählen der Abtastintervalle an der Master-Übertragungsvorrichtung und der mindestens einen Slave-Übertragungsvorrichtung zu den jeweiligen Referenzzeiten beginnt; und
nach Abschluss des Zählens der Abtastintervalle, paralleles Übertragen (440) eines gemeinsamen Datensignals an eine Empfangsvorrichtung sowohl von der Master-Übertragungsvorrichtung als auch von der mindestens einen Slave-Übertragungsvorrichtung.

9. Verfahren nach Anspruch 8, wobei eine Dauer der Abtastintervalle durch Kommunikation zwischen der Master-Übertragungsvorrichtung und mindestens einer der Slave-Übertragungsvorrichtungen entschieden wird.

10. Verfahren nach einem der Ansprüche 8-9, wobei das drahtlose Kommunikationsnetzwerk einen IEEE 802.11-Standard verwendet, und wobei die Übertragungsvorrichtungen Zugangspunkte, APs, umfassen, und die Empfangsvorrichtung eine Station, STA, umfasst.

11. Verfahren nach einem der Ansprüche 8-10, wobei die Anzahl von Abtastintervallen vorbestimmt ist.

## Revendications

1. Système de dispositifs de transmission pour un réseau de communication sans fil, dans lequel le réseau de communication sans fil est un réseau Wi-Fi, comprenant une pluralité de dispositifs de transmission configurés pour transmettre en parallèle un signal de données conjoint à un dispositif de réception par :
l'établissement (410) d'un de ladite pluralité de dispositifs de transmission comme dispositif de transmission maître et d'au moins un autre de ladite pluralité de dispositifs de transmission comme dispositif de transmission esclave ;
la définition (420) de temps de référence respectifs pour ledit dispositif de transmission maître et pour ledit au moins un dispositif de transmission esclave, dans lequel lesdits temps de référence respectifs sont définis sur la base de temps d'acquisition respectifs par ledit dispositif de transmission maître et ledit au moins un dispositif de transmission esclave d'un même signal transmis par ledit dispositif de réception ;
le comptage (430) d'un même nombre d'intervalles d'échantillonnage au niveau dudit dispositif de transmission maître et au niveau dudit au moins un dispositif de transmission esclave, dans lequel le comptage d'intervalles d'échantillonnage au niveau du dispositif de transmission maître et de l'au moins un dispositif de transmission esclave commencent auxdits temps de référence respectifs ; et
une fois ledit comptage desdits intervalles d'échantillonnage terminé, la transmission (440) dudit signal de données conjoint audit dispositif de réception à partir à la fois dudit dispositif de transmission maître et dudit au moins un dispositif de transmission esclave.

2. Système selon la revendication 1, dans lequel ledit réseau de communication sans fil utilise une norme IEEE 802.11, et dans lequel lesdits dispositifs de transmission comprennent des points d'accès, AP, et ledit dispositif de réception comprend une station, STA.

3. Système selon l'une quelconque des revendications 1 et 2, dans lequel la durée desdits intervalles d'échantillonnage est décidée par intercommunication entre ledit dispositif de transmission maître et au moins l'un desdits dispositifs de transmission esclaves.

4. Système selon l'une quelconque des revendications 1 à 3, dans lequel ledit nombre d'intervalles d'échantillonnage comprend un nombre prédéterminé.

5. Système selon l'une quelconque des revendications 1 à 3, dans lequel au moins l'un desdits dispositifs de transmission esclaves est configuré pour calculer ledit nombre d'intervalles d'échantillonnage en multipliant un entier prédéterminé par un multiplicateur déterminé à partir d'un signal reçu.

6. Système selon l'une quelconque des revendications 1 à 5, dans lequel ladite pluralité de dispositifs de transmission maintiennent une pluralité de sessions pour la transmission de données à des dispositifs de réception respectifs, chacune desdites sessions utilisant un sous-ensemble respectif de ladite pluralité de dispositifs de transmission.

7. Système selon l'une quelconque des revendications 1 à 6, dans lequel ledit dispositif de transmission maître est configuré pour transmettre un signal de paramètre de coopération véhiculant des paramètres destinés à être utilisés par au moins l'un desdits dispositifs de transmission esclaves pour la transmission dudit signal de données conjoint.

8. Procédé de communication sans fil dans un réseau Wi-Fi par une pluralité de dispositifs de transmission, lesdits dispositifs de transmission comprenant un dispositif de transmission maître et au moins un dispositif de transmission esclave, ledit procédé comprenant :
la définition (420) de temps de référence respectifs pour ledit dispositif de transmission maître et pour ledit au moins un dispositif de transmission esclave, comprenant également la définition desdits temps de référence sur la base de temps d'acquisition respectifs par ledit dispositif de transmission maître et ledit au moins un dispositif de transmission esclave d'un même signal transmis par ledit dispositif de réception ;
le comptage (430) d'un même nombre d'intervalles d'échantillonnage au niveau dudit dispositif de transmission maître et au niveau dudit au moins un dispositif de transmission esclave, dans lequel le comptage d'intervalles d'échantillonnage au niveau du dispositif de transmission maître et de l'au moins un dispositif de transmission esclave commencent auxdits temps de référence respectifs ; et
une fois ledit comptage desdits intervalles d'échantillonnage terminé, la transmission (440) d'un signal de données conjoint à un dispositif de réception en parallèle à partir à la fois dudit dispositif de transmission maître et dudit au moins un dispositif de transmission esclave.

9. Procédé selon la revendication 8, dans lequel la durée desdits intervalles d'échantillonnage est décidée par intercommunication entre ledit dispositif de transmission maître et au moins l'un desdits dispositifs de transmission esclaves.

10. Procédé selon l'une quelconque des revendications 8 et 9, dans lequel ledit réseau de communication sans fil utilise une norme IEEE 802.11, et dans lequel lesdits dispositifs de transmission comprennent des points d'accès, AP, et ledit dispositif de réception comprend une station, STA.

11. Procédé selon l'une quelconque des revendications 8 à 10, dans lequel ledit nombre d'intervalles d'échantillonnage est prédéterminé.
